# EUROPÄISCHE PATENTSCHRIFT

(11) **EP 0 988 190 B1**
(45) Veröffentlichungstag und Bekanntmachung des Hinweises auf die Patenterteilung: **18.09.2002**
(21) Anmeldenummer: 98936326.2
(22) Anmeldetag: 10.06.1998
(51) Int. Cl.: B60S 1/08

(54) **REGENSENSOR MIT GEBONDETEN SENSOR-CHIPS**
RAIN SENSOR WITH BONDED SENSOR CHIPS
DETECTEUR DE PLUIE A PUCES DETECTRICES LIEES

(30) Priorität: 14.06.1997 DE 19725287
(43) Veröffentlichungstag der Anmeldung: 29.03.2000
(73) Patentinhaber: Valeo Auto-Electric Wischer und Motoren GmbH, 74321 Bietigheim-Bissingen (DE)
(72) Erfinder: SCHMID, Bernd, D-74348 Lauffen (DE); SCHULER, Thomas, D-75446 Wiernsheim (DE)
(74) Vertreter: Steimle, Josef, Dipl.-Ing.
(86) Internationale Anmeldenummer: EP9803528
(87) Internationale Veröffentlichungsnummer: WO98057830

(56) Entgegenhaltungen:
- DE-A- 19 701 258
- FR-A- 2 722 291
- FR-A- 2 723 448
- US-A- 4 701 613
- PATENT ABSTRACTS OF JAPAN vol. 009, no. 009 (P-327), 16. Januar 1985 & JP 59 159053 A (NIPPON DENSO KK), 8. September 1984

## Beschreibung

Die Erfindung betrifft einen Sensor zum Erkennen des Belags auf der Außenfläche einer Scheibe, beispielsweise einen Regensensor, wie er zur von der Benetzung einer Scheibe eines Kraftfahrzeugs abhängigen Steuerung eines Wischersystems benötigt wird.

Aus der FR-OS 2 722 291 ist es, dem Oberbegriff des Anspruchs 1 entsprechend, bekannt, Licht einer Leuchtdiode von der ersten Seitenfläche einer Scheibe einzukoppeln, welches an der Grenzfläche der zweiten Scheibenfläche reflektiert wird. Die Größe der gemessenen reflektierten Strahlung ist ein Maß für die Benetzung der Scheibe. Dieser Sensor hat jedoch räumlich erhebliche Abmessungen, was insbesondere bei der Verwendung mehrerer Leuchtdioden ins Gewicht fällt. Es werden optische Linsen benötigt, welche die stirnseitig ermittierte Strahlung beugen.

Dadurch verringert sich der Wirkungsgrad des Sensors und verschlechtert sich dessen Empfindlichkeit.

Die vorliegende Erfindung geht daher von einem Sensor der sich aus dem Oberbegriff des Anspruchs 1 ergebenden Gattung aus.

Aufgabe der Erfindung ist es, den Sensor derart auszugestalten, daß vorteilhaft eine größere Anzahl von Strahlungssendern eingesetzt werden können, wobei der Sensor preiswert fertigbar sein und nur geringe Abmessungen haben soll.

Die Erfindung wird durch die sich aus dem Ansprüch 1 ergebende Merkmalskombination gelöst.

Die Erfindung besteht im Prinzip darin, auf die Verwendung gekapselter und im Handel erhältlicher Leuchtdioden zu verzichten, die einen relativ großen Raumbedarf haben und gleichzeitig teuer sind. Derartige handelsübliche Leuchtdioden besitzen Chips, die auf Stromzuleitungen aufgebondet, mit einem Reflektor versehen und anschließend in ein Gehäuse eingebracht werden. Der Kern der Erfindung besteht darin, die Chips unmittelbar in der gewünschten Anordnung auf einer Leiterplatte aufzubonden, wodurch sich eine große Anzahl von Vorteilen ergeben. Zum einen kann auf die Reflektoren und das Diodengehäuse verzichtet werden.

Um die Empfindlichkeit des Sensors besonders groß zu halten, sollte der unter einem bestimmten Winkel abgestrahlte Lichtstrom besonders groß sein. Es wird also ein LED-Chip ausgewählt, der einen großen Lichtstrom von seinen Seitenflächen abstrahlt (Kantenabstrahlung).

Statt also die stirnseitige Abstrahlung eines LED-Chips durch eine Linse zu konzentrieren, wird hier der umgekehrte Weg gegangen, indem die erhebliche Seitenstrahlung des Chips unmittelbar schräg in die Scheibe eingekoppelt wird. Hierdurch ergibt sich bei einer großen Platzersparnis eine sehr viel größere Ausbeute für den zu messenden Lichtstrom.

Die Lage der Chips auf der Leiterplatte läßt sich darüber hinaus sehr genau bestimmen. Ein weiterer Vorteil besteht darin, daß die räumlichen Abmessungen für die Sender bzw. den Empfänger und damit auch der Leiterplatte sehr klein gemacht werden können. Das ist insofern wichtig, als der Sensor im Reinigungsbereich des Wischers angeordnet werden muß und damit im Sichtfeld des Fahrers liegt. Ein kleinerer Sensor läßt sich aber beispielsweise im Fuß des Rückspiegels für den Fahrer unsichtbar unterbringen.

Insbesondere für den Fall, daß statische oder quasi statische Beleuchtungsverhältnisse in dem Meßergebnis unterdrückt werden sollen, empfiehlt es sich, mehrere Strahlungssender zu verwenden, so daß langsame Änderungen des gemessenen Lichtstromes leicht ausgeblendet werden können. Für diesen Fall empfiehlt sich insbesondere die Anwendung der Merkmalskombination nach Anspruch 2. Man erhält dann eine größere Anzahl überwachter Bereiche auf der Scheibe. Die Verwendung nur eines Strahlungsempfängers, der als lichtempfangende Diode ausgestaltet sein kann, stellt sicher, daß der gleiche reflektierte Lichtstrom auch immer zu dem gleichen Meßergebnis führt.

Um nicht durch Licht gestört zu werden, welches in dem für den Menschen sichtbaren Bereich liegt, wird man vorteilhaft sehr langwellige oder kurzwellige Strahlung verwenden. Die vorliegende Erfindung schlägt hierzu die Verwendung von Infrarotstrahlung vor. Um die LED-Chips mechanisch zu schützen, dient eine Abdeckung. In Weiterbildung der Erfindung empfiehlt sich hierbei die Merkmalskombination nach Anspruch 4, die im Kern besagt, die Abdeckung gleichzeitig als IR-Filter zu verwenden. Zum einen erhält die auf diese Weise schwarze Abdeckung ein ästhetisch ansprechendes Aussehen. Zum anderen werden auch von dem Empfänger Strahlungsformen abgehalten, die außerhalb des von den LED-Sendern bevorzugten Frequenzbereich der Strahlung liegen. Die Abdeckung besitzt den einzelnen Sendern bzw. dem Empfänger zugeordnete Ausnehmungen, die Raum für die LED-Chips und deren verdrahtung schaffen. Auf diese Weise bilden die Ausnehmungen eine Verkapselung der einzelnen Chips auf der Leiterplatte.

Um die Empfindlichkeit der Messung zu erhöhen, wird angestrebt, die Strahlung, die sich nicht aus der Totalreflexion an der äußeren Grenzschicht der Scheibe der von den Sendern eingekoppelten Strahlung ergibt, möglichst von dem Empfänger fernzuhalten. Hierbei empfiehlt sich insbesondere die Merkmalskombination nach Anspruch 5. Die optische Barriere umgibt dabei den Empfänger als eine im wesentlichen ringförmige, für Infrarot undurchlässige Wand, die sowohl in die Abdeckung eingekoppelte Infrarotsendestrahlung als auch über die Scheibe in die Abdeckung eintretende Strahlung fernhält, soweit sie nicht im vorgesehenen Winkel auf den Empfänger einfällt.

Eine besonders einfache Ausgestaltung für die Barriere bekommt man unter Verwendung der Merkmalskombination nach Anspruch 6. Hierbei wird die Barriere im geeigneten Abstand und im wesentlichen ringförmig um die Empfangsdiode geführt. Dabei bildet die Barriere einen ringförmigen Einsatz aus von dem Material der Abdeckung abweichenden Material. Während die Abdeckung nämlich Infrarot zur Scheibe hinleiten soll, soll der Einsatz die Übertragung derartiger Infrarotstrahlung gerade verhindern. Besonders vorteilhaft ist es weiterhin, wenn dieser Einsatz auch aus einem elastischen Material ist, so daß es sich besser dichtend an die Leiterplatte anlegen kann. Eine andere Möglichkeit besteht darin, die Barriere an der Leiterplatte zu befestigen um zu verhindern, daß über die weiter unten noch geschilderte Klebschicht von der Totalreflexion an der Scheibengrenzfläche stammende Strahlung zu dem Empfänger gelangen kann. Hierzu kann sich auch empfehlen, innerhalb der Klebschicht eine Barriere vorzusehen. Diese kann beispielsweise ebenfalls an der Abdekkung befestigt sein und ggf. einstückig mit der zur Leiterplatte weisenden Barriere vereint werden. Die Barriere muß auch nicht in sich geschlossen kreisförmig sein. Sie kann eine von der Kreisform abweichende Form besitzen und aus mehreren Wänden bestehen oder den Ausschnitt aus einer Spirale darstellen.

Um die von den Dioden abgegebene Wärme abzuführen und möglicherweise störende (elektromagnetische) Strahlung von den in der Ebene der Chips liegenden Leiterbahnen der Leiterplatte abzuhalten, empfiehlt sich in Weiterbildung der Erfindung die Merkmalskombination nach Anspruch 8. Danach ist die Unterseite der Leiterplatte mit einer großflächigen Kupferschicht versehen, die allerdings Raum für Steckeranschlüsse, Zentrierposten und ähnliches lassen muß.

Eine andere Weiterbildung der Erfindung beschäftigt sich mit der Befestigung des erfindungsgemäßen Sensors an der Scheibe. Hierzu empfiehlt sich die Merkmalskombination nach Anspruch 9. Danach wird die Abdeckung über eine Klebschicht an der Innenfläche der Scheibe befestigt. Es müssen daher Mittel vorhanden sein, über welche die Abdeckung die Leiterplatte mit den Chips zu halten vermag. Dies kann beispielsweise durch eine Rastverbindung über seitliche Arme an der Abdeckung oder durch unlösbare Klebverbindungen oder durch lösbare Schraubverbindungen geschehen. Für die Klebschicht wichtig ist, daß sie hinreichend dick ist, um die Scheibenkrümmung gegenüber der ebenen Oberfläche der Abdeckung auszugleichen. Es kann in Sonderfällen und in großen Serien allerdings auch vorgesehen werden, daß die Oberfläche der Abdeckung an die Scheibenkrümmung angepaßt ist. In diesem Fall kann die Klebschicht erheblich dünner gewählt werden. Die Klebschicht kann weiterhin auch dazu dienen, den Abstand der Leiterplatte und damit der Chips von der Grenzfläche der Scheibe einzustellen, um möglicherweise unterschiedliche Scheibendicken einzelner Fahrzeugtypen ausgleichen zu können.

Als eine praktikable Diche für eine Klebschicht hat sich z.B. eine Dicke von etwa 1 mm bewährt. Um die Übertragung der von den sendenden Chips ausgesandten Strahlung möglichst groß zu halten, empfiehlt sich in Weiterbildung die Merkmalskombination nach Anspruch 11. Es wird somit versucht, den Brechungsindex der Abdeckung und der Klebschicht dem Brechungsindex der Scheibe anzupassen.

Ein Ausführungsbeispiel der Erfindung wird nachfolgend anhand der Zeichnung erläutert. Dabei zeigt
- Fig. 1: in symbolischer Darstellung die vom Empfänger meßbare Strahlung bei Verwendung einer handelsüblichen in ein eigenes Gehäuse eingearbeiteten Leuchtdiode
- Fig. 2: die Vergrößerung der Strahlungsleistung durch Verwendung von direkt auf eine Leiterplatte gebondeten LED-Chips
- Fig. 3: eine Draufsicht auf die Leiterplatte und die in Höhe der Leiterplattenoberfläche geschnittene Abdeckung und
- Fig. 4: eine geschnittene Darstellung des Sensors nach Fig. 3.

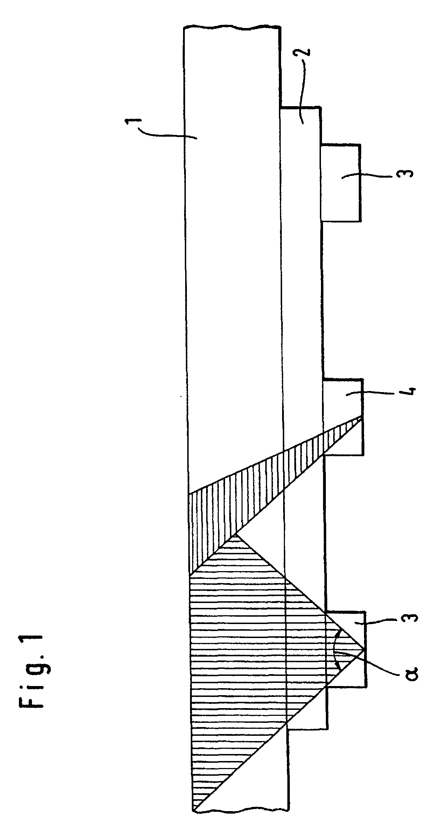

Fig. 1 zeigt ausschnittsweise eine Scheibe 1, an der über eine Klebschicht 2 zwei handelsübliche Leuchtdioden 3 und eine im Handel erhältliche Empfangsdiode 4 befestigt sind. Die Sender 3 haben üblicherweise einen Abstrahlungswinkel von 120 Grad. Fig. 1 zeigt, daß nur ein kleiner Bruchteil der abgestrahlten Strahlung über Totalreflexion zu der Empfangsdiode 4 gelangen kann, soweit man die Schnittebene der Strahlung betrachtet. Das liegt daran, daß nur bei einem sehr kleinen Bereich der abgesandten Strahlung eine Totalreflexion auftreten kann. Mathematische Einzelheiten hierzu sind in der DE-OS 43 37 835 ausführlich geschildert.

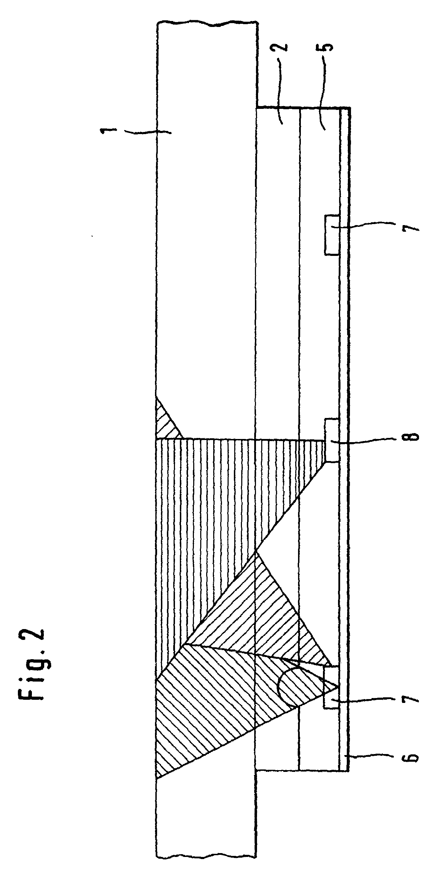

Fig. 2 zeigt augenfällig die Vergrößerung der für eine Totalreflexion zum -Empfangschip hin übertragenen durch den Sender 7 ausgesandten Strahlung. In Fig. 2 ist wiederum die Scheibe 1 dargestellt, wobei über eine Klebschicht 2 die Abdeckung 5 einschließlich der von ihr umfaßten Leiterplatte 6 an der Scheibe 1 befestigt ist. Bei sonst vergleichbaren Verhältnissen wurde die gekapselte Sendediode nach Fig. 1 durch einen auf die Leiterplatte 6 gebondeten LED-Chip 7 ersetzt, während der mit einem Gehäuse versehene Empfänger 4 nach Fig. 1 durch einen entsprechenden Empfangschip 8 ersetzt ist. Die Bauelemente 7 und 8 haben insofern einen vergleichbaren Aufbau. Da der LED-Chip 7 keinen Reflektor besitzt, zeigt er ein Abstrahlungsverhalten, bei dem 30 % der Strahlung über die Stirnfläche des Chips 7 abgestrahlt werden, während 70 % der Strahlung über die Seitenflächen (Kanten) abgegeben werden. Für die Erfindung wichtig ist, daß der Flächenbereich an der Grenzschicht der Scheibe 1, bei dem eine Totalreflexion zu dem Empfangschip 8 hin möglich ist, mehr Leistung pro Fläche erhält. Man kommt also trotz Verzicht auf einen Reflektor auf eine höhere Empfangsleistung am Empfangschip 8 gegenüber den vergleichbaren Verhältnissen nach Fig. 1.

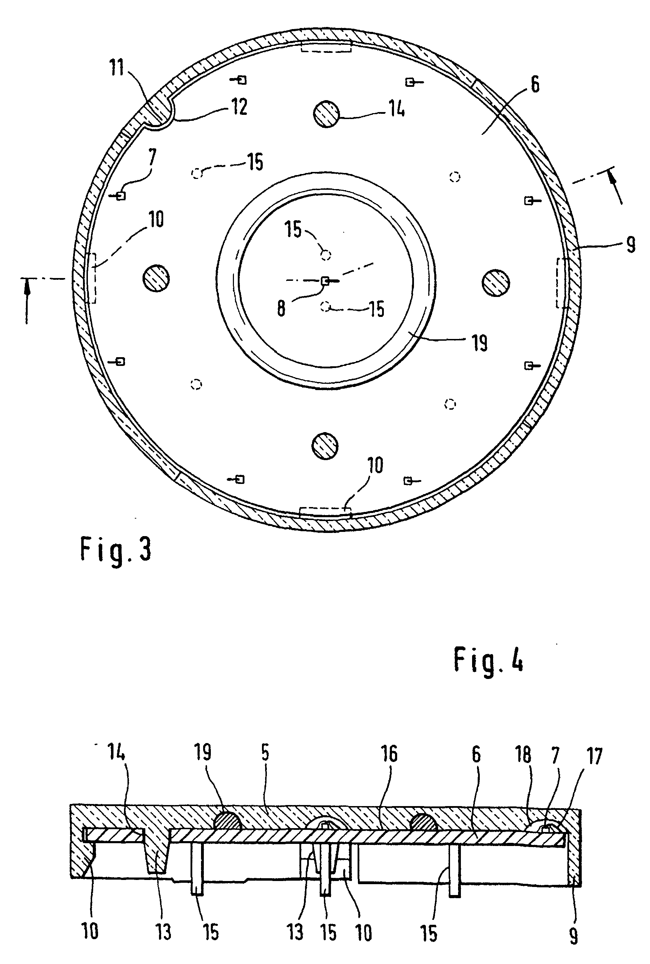

Fig. 3 zeigt die im wesentlichen kreisförmige Leiterplatte 6, auf der acht LED-Chips 7 und als Empfangschip ein LED-Chip 8 angeordnet sind. In Fig. 3 ist noch ein umlaufender Vorsprung 9 der Abdeckung 5 zu erkennen, wobei an dem vorsprung noch federnde Resthaken 10 vorgesehen sind, welche die Leiterplatte 6 umklammern. Der Vorsprung 9 ist noch mit einem Zentrieransatz 11 versehen, welcher bei drehrichtiger Lage der Abdeckung 5 gegenüber der Leiterplatte 6 in eine entsprechende Ausnehmung 12 in der Leiterplatte eingreift. Die Stellung der Abdeckung 5 gegenüber der Leiterplatte 6 ist auch noch durch Zentrierstifte 13 gesichert, die in zugeordnete Öffnungen 14 in der Leiterplatte ragen. Von der Leiterplatte 6 gehen auch noch Steckerstifte 15 nach unten ab, über die die Einheit aus Abdeckung 5 und Leiterplatte 6 beispielsweise auf eine kreisscheibenförmige Verarbeitungseinheit aufgesteckt und mit dieser elektrisch verbunden werden kann. Auf der Oberfläche 16 der Leiterplatte 6 sind nicht nur die elektrischen Verbindungsleitungen aufgebracht, sondern es sitzen dort auch die LED-Chips 7 mit ihren Anschlußdrähten 17. Um für diese Bauelemente Raum zu schaffen, was auch für den Empfangschip 8 gilt, ist die Abdeckung 5 mit im wesentlichen domförmigen Ausnehmungen 18 versehen. Für den erfindungsgemäßen Sensor wichtig ist auch eine Barriere 19 aus einem lichtundurchlässigen elastischen Kunststoff, der ringförmig in die Abdeckung 5 eingesetzt ist. Wie weiter oben schon erwähnt, kann die Barriere 19 aber auch anders ausgestaltet sein.

## Patentansprüche

1. Sensor zum Erkennen des Belages auf der Außenfläche einer Scheibe (1) mit mindestens einem auf einer Leiterplatte (6) angeordneten Sender (7), von dem Strahlung über die Innenfläche der Scheibe (1) in diese eingekoppelt wird, mit einem Empfänger (4), der zumindest einen Teil der an der äußeren Grenzfläche der Scheibe (1) reflektierten und an der Innenfläche der Scheibe (1) ausgekoppelten Strahlung empfängt, **dadurch gekennzeichnet, daß** der Sender (7) auf die Leiterplatte (6) aufgebondet ist, und dass der Sender (7) ein als Kantenemitter arbeitender LED-Chip ist.

2. Sensor nach Anspruch 1, **dadurch gekennzeichnet, daß** mehrere Sender (7) kreisförmig um den Empfänger (8) angeordnet sind und daß die Leiterplatte (6) im wesentlichen parallel zur Scheibenebene (1) angeordnet ist.

3. Sensor nach Anspruch 1 oder 2, **dadurch gekennzeichnet, daß** der Sender (7) ein IRED-Chip ist.

4. Sensor nach einem der vorangegangenen Ansprüche, **dadurch gekennzeichnet, daß** zwischen die mit dem mindestens einen Sender (7) und dem Empfänger (8) versehene Leiterplatte (6) und die Innenfläche der Scheibe (1) eine Abdeckung (5) eingefügt ist, daß die Abdeckung (5) aus einem für Infrarotstrahlung durchlässigen Kunststoff gebildet ist, und dass die Abdeckung auf der dem mindestens einen Sender (7) und auf ihrer dem Empfänger (8) zugewandten Seite (16) mit dem mindestens linen Sender (7) bzw. dem Empfänger (8) zugeordneten, vorzugsweise eine gekrümmte Raumform aufweisenden Ausnehmungen (18) versehen ist.

5. Sensor nach Anspruch 4, **dadurch gekennzeichnet, daß** die Abdeckung (5) mit einer optischen Barriere (19) versehen ist, welche bevorzugt die Strahlung des Senders (7) zum Empfänger (8) durchläßt, welche in einem definierten Winkelbereich von dem Sender (7) zur Scheibe (1) abgestrahlt und von der Grenzschicht der Scheibe zum Empfänger (8) reflektiert wird.

6. Sensor nach Anspruch 5, **dadurch gekennzeichnet, daß** die Barriere (19) ein mit der Abdeckung (5) verbundener, im wesentlichen ringförmiger Einsatz ist, welcher zwischen dem bzw. den Sendern (7) und dem Empfänger (8) angeordnet ist und der den Strahlungsempfänger (8) im wesentlichen konzentrisch umgibt.

7. Sensor nach Anspruch 5 oder 6, **dadurch gekennzeichnet, daß** der Einsatz (19) aus einem Material gebildet ist, welches für Lichtstrahlung insbesondere IR-Strahlung nicht transparent ist und vorzugsweise aus einem elastischen Material gebildet ist.

8. Sensor nach einem der vorangegangenen Ansprüche, **dadurch gekennzeichnet, daß** die den Sendern (8) abgewandte Seite der Leiterplatte (6) mit einer großflächigen Kupferschicht versehen ist.

9. Sensor nach einem der vorangegangenen Ansprüche, **dadurch gekennzeichnet, daß** zwischen die Innenfläche der Scheibe (1) und der dieser Innenfläche zugewandten Seitenfläche der Abdeckung (5) eine Klebschicht (2) eingefügt ist, über welche der Sensor an der Innenfläche der Scheibe (1) gehalten ist.

10. Sensor nach Anspruch 9, **dadurch gekennzeichnet, daß** die Dicke der Klebschicht (2) ungefähr so groß wie die Dicke der Abdeckung (5) gewählt ist und in der Größenordnung von 1 mm liegt.

11. Sensor nach Anspruch 9 und einem der Ansprüche 4 bis 8, **dadurch gekennzeichnet, daß** die Abdeckung (5) und die Klebschicht (2) im wesentlichen den gleichen Brechungsindex wie die Scheibe (1) haben, der etwa zwischen 1,5 und 1,65 liegt.

12. Sensor nach einem der vorangegangenen Ansprüche, **dadurch gekennzeichnet, daß** der zu erkennende Belag auf der Außenfläche einer Scheibe (1) aus Feuchtigkeit oder Verschmutzungen besteht.

13. Sensor nach einem der vorangegangenen Ansprüche, **dadurch gekennzeichnet, daß** der Empfänger (8) ein auf eine Leiterplatte gebondeter Empfangschip ist.

## Claims

1. Sensor for detecting a coating on the outer surface of a windshield (1), with at least one transmitter (7) that is arranged on a printed circuit board (6). wherein said transmitter emits radiation into the windshield (1) via the inner surface of said windshield, and with a receiver (4) that receives at least part of the radiation that is reflected on the outer boundary surface of the windshield (1) and emerges from the inner surface of the windshield (1), **characterized by** the fact that the transmitter (7) is bonded onto a printed circuit board (6), and by the fact that the transmitter (7) consists of a LED chip that operates as an edge emitter.

2. Sensor according to claim 1, **characterized by** the fact that several transmitters (7) are circularly arranged around the receiver (8), and by the fact that the printed circuit board (6) is arranged essentially parallel to the plane of the windshield (1).

3. Sensor according to claim 1 or 2, **characterized by** the fact that the transmitter (7) consists of an IRED chip.

4. Sensor according to one of the previous claims, **characterized by** the fact that a cover (5) is inserted between the inner surface of the windshield (1) and the printed circuit board (6) that contains the at least one transmitter (7) and the receiver (8), by the fact that the cover (5) consists of a plastic material that is permeable to infrared radiation, and by the fact that the side (16) of the cover (5) which faces the at least one transmitter (7) and the receiver (8) is provided with preferably curved recesses (18) that are respectively assigned to the at least one transmitter (7) and the receiver (8).

5. Sensor according to claim 4, **characterized by** the fact that the cover (5) is provided with an optical barrier (19) that preferably allows the radiation of the transmitter (7) to pass to the receiver (8), with said radiation being emitted by the transmitter (7) at a defined angular range referred to the windshield (1) and reflected to the receiver (8) by the boundary layer of the windshield.

6. Sensor according to claim 5, **characterized by** the fact that the barrier (19) consists of an essentially annular insert that is connected to the cover (5), arranged between the transmitter(s) (7) and the receiver (8) and surrounds the radiation receiver (8) in an essentially concentric fashion.

7. Sensor according to claim 5 or 6, **characterized by** the fact that the insert (19) consists of a preferably elastic material that is impermeable to luminous radiation, in particular, IR radiation.

8. Sensor according to one of the previous claims, **characterized by** the fact that the side of the printed circuit board (6) which faces away from the transmitters (8) is provided with a large-surface copper layer.

9. Sensor according to one of the previous claims, **characterized by** the fact that an adhesive layer (2) that holds the sensor an the inner surface of the windshield (1) is inserted between the inner surface of the windshield (1) and the lateral surface of the cover (5) which faces the inner surface of the windshield.

10. Sensor according to claim 9, **characterized by** the fact that the thickness of the adhesive layer (2) approximately corresponds to the thickness of the cover (5) and is an the range of 1 mm.

11. Sensor according to claim 9 and one of claims 4 to 8, **characterized by** the fact that the cover (5) and the adhesive layer (2) essentially have the same refractive index as the windshield (1), with the refractive index of the windshield lying approximately between 1.5 and 1.65.

12. Sensor according to one of the previous claims, **characterized by** the fact that the coating to be detected on the outer surface of the windshield (1) consists of moisture or dirt.

13. Sensor according to one of the previous claims, **characterized by** the fact that the receiver (8) consists of a reception chip that is bonded onto a printed circuit board.

## Revendications

1. Détecteur pour identifier le dépôt sur la surface extérieure d'une vitre (1), comprenant au moins un émetteur (7) disposé sur une carte de circuits imprimés (6), qui injecte un rayonnement dans la vitre par l'intermédiaire de la surface intérieure de celle-ci, un récepteur (4) qui reçoit au moins une partie du rayonnement réfléchi sur la surface limite extérieure de la vitre et découplée sur la surface intérieure de la vitre (1), **caractérisé en ce que** l'émetteur (7) est bondé sur la carte de circuits imprimés et **en ce que** l'émetteur (7) est une puce à LED à émission par la tranche.

2. Détecteur selon la revendication 1, **caractérisé en ce que** plusieurs émetteurs (7) sont disposés en cercle autour du récepteur (8), et **en ce que** la carte de circuits imprimés (6) est pour l'essentiel disposée parallèlement au plan de la vitre (1).

3. Détecteur selon la revendication 1 ou 2, **caractérisé en ce que** l'émetteur (7) est une puce à IRED.

4. Détecteur selon l'une des revendications précédentes, **caractérisé en ce qu'**entre la carte de circuits imprimés (6) pourvue d'au moins un émetteur (7) et du récepteur et la surface intérieure de la vitre (1) est inséré un revêtement (5), que le revêtement (5) est constitué par une matière plastique perméable au rayonnement infrarouge, et que le revêtement, sur la face (16) orientée vers l'au moins un émetteur (7) et vers le récepteur (8), est pourvu de creux (18) présentant de préférence une forme spatiale courbée associés à l'au moins émetteur (7) ou au récepteur (8).

5. Détecteur selon la revendication 4, **caractérisé en ce que** le revêtement (5) est pourvu d'une barrière optique (19) qui de préférence laisse passer le rayonnement de l'émetteur (7) vers le récepteur, qui est rayonné par l'émetteur (7) dans un angle défini vers la vitre (1) et réfléchi par la couche limite de la vitre vers le récepteur (8).

6. Détecteur selon la revendication 5, **caractérisé en ce que** la barrière (19) est un insert pour l'essentiel de forme annulaire relié au revêtement (5), disposé entre le ou les émetteur(s) (7) et le récepteur (8) et qui entoure le récepteur de rayonnement (8) pour l'essentiel de manière concentrique.

7. Détecteur selon la revendication 5 ou 6, **caractérisé en ce que** l'insert (19) est constitué par un matériau qui n'est pas transparent au rayonnement de lumière et notamment au rayonnement infrarouge, et de préférence par un matériau élastique.

8. Détecteur selon l'une des revendications précédentes, **caractérisé en ce que** la face de la carte de circuits imprimés (6) opposée aux émetteurs (8) est pourvue d'une couche de cuivre d'une grande surface.

9. Détecteur selon l'une des revendications précédentes, **caractérisé en ce qu'**entre la surface intérieure de la vitre (1) et la face latérale du revêtement (5) orientée vers cette surface intérieure une couche adhésive (2) est insérée, qui maintient le détecteur sur la surface intérieure de la vitre (1).

10. Détecteur selon la revendication 9, **caractérisé en ce que** la couche adhésive (2) présente une épaisseur sensiblement de la même taille que celle du revêtement (5) et qu'elle est de 1 mm environ.

11. Détecteur selon la revendication 9 et l'une des revendications 4 à 8, **caractérisé en ce que** le revêtement (5) et la couche adhésive (2) ont pour l'essentiel le même indice de réfraction que la vitre (1), qui est compris entre 1,5 et 1,65 environ.

12. Détecteur selon l'une des revendications précédentes, **caractérisé en ce que** le dépôt visible sur la face surface extérieure d'une vitre (1) est constitué d'humidité ou de salissures.

13. Détecteur selon l'une des revendications précédentes, **caractérisé en ce que** le récepteur (8) est une puce réceptrice bondée sur une carte de circuits imprimés.
